(19) **Europäisches Patentamt / European Patent Office / Office européen des brevets**

(11) **EP 4 663 502 A1**

(12) **EUROPEAN PATENT APPLICATION**
published in accordance with Art. 153(4) EPC

(43) Date of publication:
**17.12.2025 Bulletin 2025/51**

(21) Application number: **24762910.8**

(22) Date of filing: **24.01.2024**

(51) International Patent Classification (IPC):
**B60W 60/00** (2020.01)

(52) Cooperative Patent Classification (CPC):
**B60W 60/00**

(86) International application number:
**PCT/CN2024/073781**

(87) International publication number:
**WO 2024/179227 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.02.2023 CN 202310226142**

(71) Applicant: **Shenzhen Yinwang Intelligent
Technologies Co., Ltd.
Shenzhen, Guangdong 518110 (CN)**

(72) Inventors:
- **HE, Yue**
  **Shenzhen, Guangdong 518129 (CN)**
- **LIU, Jianqin**
  **Shenzhen, Guangdong 518129 (CN)**
- **GAI, Jiyu**
  **Shenzhen, Guangdong 518129 (CN)**

(74) Representative: **Gill Jennings & Every LLP
The Broadgate Tower
20 Primrose Street
London EC2A 2ES (GB)**

(54) **VEHICLE OPERATION DETERMINATION METHOD AND APPARATUS**

(57) A vehicle operation determining method and apparatus are provided. The method includes: obtaining a preset condition to be met by a vehicle for enabling a vehicle function on a target road section and operation information of the vehicle that is traveling on the target road section based on an automated driving system, where the preset condition includes N preset elements and requirement descriptions of the N elements, the operation information includes M elements and collected content of a current status of the M elements, the M elements are some or all of the N elements, and M and N are positive integers; comparing the operation information with the preset condition; and when collected content of a first element in the operation information does not match a requirement description of the first element in the preset condition, determining that the vehicle exits the automated driving system. In this way, it can be quickly determined to exit the automated driving system, thereby improving safety of vehicle operation.

S201: Obtain a preset condition to be met by a vehicle for enabling a vehicle function on a target road section and operation information of the vehicle that is traveling on the target road section based on an automated driving system

S202: Compare the preset condition with the operation information, and when collected content of a first element in M elements in the operation information does not match a requirement description of the first element in the preset condition, determine that the vehicle exits the automated driving system

FIG. 2

EP 4 663 502 A1

**Description**

This application claims priority to Chinese Patent Application No. 202310226142.9, filed with the China National Intellectual Property Administration on February 27, 2023 and entitled "VEHICLE OPERATION DETERMINING METHOD AND APPARATUS", which is incorporated herein by reference in its entirety.

**TECHNICAL FIELD**

This application relates to the field of automated driving, and in particular, to a vehicle operation determining method and apparatus.

**BACKGROUND**

In an automated driving scenario, safe operation of an automated driving system of a vehicle is related to many factors (or elements), such as an expected operational design condition (operational design condition, ODC) and operational design domain (operational domain design, ODD).

In an operation process of the automated driving system, how to quickly determine to exit the automated driving system to ensure safety of vehicle operation is an urgent problem to be resolved.

**SUMMARY**

This application discloses a vehicle operation determining method and apparatus, to quickly determine to exit an automated driving system, thereby improving safety of vehicle operation.

According to a first aspect, this application provides a vehicle operation determining method, where the method includes: obtaining a preset condition to be met by a vehicle for enabling a vehicle function on a target road section, where the preset condition includes N preset elements and requirement descriptions of the N elements, and N is a positive integer; obtaining operation information of the vehicle that is traveling on the target road section based on an automated driving system, where the operation information includes M elements and collected content of a current status of the M elements, the M elements are some or all of the N elements, and M is a positive integer; comparing the preset condition with the operation information; and when collected content of a first element in the M elements does not match a requirement description of the first element, determining that the vehicle exits the automated driving system.

For example, an element may be understood as an attribute, a status, or the like associated with a vehicle function.

For example, when the preset condition is an operational design domain ODD, the ODD may be classified into a "static entity", an "environmental condition", and a "dynamic entity". Elements belonging to the "static entity" include but are not limited to at least one ODD element of a road type, a road surface, road geometry, lane intersection, a lane feature, a traffic sign, a road edge, a road facility, and the like. Elements belonging to the "environmental condition" include but are not limited to at least one ODD element of weather, lighting, a connectivity degree, and the like. Elements belonging to the "dynamic entity" includes but is not limited to at least one ODD element of a traffic condition, a road user, a non-road user, and the like. In some possible embodiments, an ODD element may be obtained with a finer classification manner than described above.

Herein, the operational design domain ODC includes the ODD, a driver/passenger status, a vehicle status, and another necessary condition. For example, when the preset condition is the operational design domain ODC, in addition to the ODD element, the elements in the preset condition further includes elements corresponding to the driver/passenger status, the vehicle status, and the another necessary condition.

For example, a requirement description of an element may be understood as a constraint, a requirement, or a limitation on the element. The requirement description of the element may be represented by a text description, a value, a value range, a character, a character string, a character string set, a discrete value set, or another manner.

For example, when a vehicle function A is enabled, a requirement description of an element "visibility" is "$\geq$ 2km", a requirement description of an element "lane feature" is "clear marking", a requirement description of an element "lane direction" is "drive on the right", a requirement description of an element "raining" is "daily precipitation $\leq$ 10mm", a requirement description of an element "road user" is "no pedestrian", and so on.

In different scenarios, definitions of the target road section may be different. For example, in a high-speed navigation automated driving scenario, the target road section may be at least one section of road on a highway or at least one section of road on an urban expressway. For another example, in a memory parking scenario, the target road section may be at least one section of road from a start location of the vehicle to a parking space in an outdoor parking lot, or at least one section of road from a start location of the vehicle to a parking space in an indoor parking lot.

Herein, the preset condition is prior information. For example, the preset condition includes but is not limited to a preset condition to be met for enabling the vehicle function, such as the operational design condition ODC and the operational design domain ODD.

For example, some or all of the operation information may be collected in real time, or may be obtained by processing original data collected in real time.

For example, obtaining the operation information includes at least one of the following manners:

obtaining some or all of the operation information through a sensing system in the automated driving system;
obtaining some or all of the operation information through a roadside device; and
obtaining some or all of the operation information through a network side device.

For example, when M is less than N, an application scenario may be as follows: A collection device corresponding to some elements in the N preset elements may currently not be woken up at a collection moment corresponding to the operation information, or some elements in the N preset elements are not collected at a collection moment corresponding to the operation information.

In the foregoing method, if the collected content of the first element in the operation information does not match the requirement description of the first element in the preset condition, it indicates that the automated driving system of the vehicle is not in a safe operation range on the target road section, and there is a risk that a dynamic driving task is still executed by the automated driving system when the vehicle currently travels on the target road section. Therefore, it can be quickly determined that the vehicle exits the automated driving system, thereby helping improve safety of vehicle operation.

Optionally, the vehicle function includes but is not limited to an automated driving function, an assisted driving function, and the like. In this way, in an automated driving scenario or an assisted driving scenario, it can be determined in time that the vehicle exits the automated driving system, thereby helping improve safety of vehicle operation.

Optionally, that the collected content of the first element does not match the requirement description of the first element is any one of the following cases:

both the requirement description of the first element and the collected content of the first element are values, and the requirement description of the first element is not equal to the collected content of the first element;
both the requirement description of the first element and the collected content of the first element are character strings, and the requirement description of the first element is different from the collected content of the first element;
the requirement description of the first element is a first value range, the collected content of the first element is a first value or a second value range, and the first value is not within the first value range or the second value range is not a subset of the first value range; or
the requirement description of the first element is a first character string set, the collected content of the first element is a first character string or a second character string set, and the first character string does not belong to the first character string set or the second character string set is not a subset of the first character string set.

In the foregoing implementation, various cases in which the collected content of the first element does not match the corresponding requirement description are fully considered.

Optionally, comparing the preset condition with the operation information includes: comparing the collected content of the M elements with the preset condition in a preset order based on priorities of the M elements.

For example, the priorities of the M elements may be indicated through priority information.

For example, a preset order corresponding to an element with a higher importance is higher, or a preset order corresponding to an element with a comparison process consuming less time is higher.

For another example, when a comparison between collected content of an element 1 and a corresponding requirement description is a comparison between values, and a comparison between collected content of an element 2 and a corresponding requirement description is a comparison between value ranges, time consumed by a comparison process of the element 1 is shorter than time consumed by a comparison process of the element 2.

In this way, comparison is performed based on the preset order of the M elements, which helps improve data processing efficiency and vehicle operation determining efficiency.

Optionally, comparing the preset condition with the operation information includes: comparing whether collected content of each of the M elements matches a requirement description of the corresponding element, to obtain comparison results respectively corresponding to the M elements, where a second element is any one of the M elements, and when collected content of the second element matches a requirement description of the second element, a comparison result corresponding to the second element is 1; or when collected content of the second element does not match a requirement description of the second element, a comparison result corresponding to the second element is 0.

For example, a comparison result corresponding to an element is represented by "1" (in a case of matching) or "0" (in a case of mismatch). A statistical result may be further obtained, and the statistical result is obtained based on the comparison results respectively corresponding to the M elements. For example, the statistical result is obtained by using a binary decision tree (binary decision diagram, BDD) or an ordered binary decision tree (ordered binary decision diagram, OBDD). The statistical result is a product of the comparison results respectively corresponding to the M elements. When the statistical result is 0, it is determined to exit the automated driving system.

For example, when the M elements are all of the N elements, the method further includes: when the comparison result corresponding to each of the M elements is 1, determining to keep operation of the automated driving system.

Optionally, the method is applied to the vehicle, and the method further includes: requesting a user of the vehicle to take over; and exiting the automated driving system when receiving a confirmation reply indicating that the user agrees to take over.

Herein, the user of the vehicle may be, for example, a driver currently sitting in a driver seat in the vehicle, a passenger in the vehicle, a backup user for the dynamic driving task, or another natural person driver in the vehicle who can currently take over the vehicle. When the automated driving system is not in the safe operation range, requesting the user of the vehicle to take over in time can improve safety of vehicle operation.

Optionally, the method further includes: controlling the vehicle to decelerate or stop before receiving the confirmation reply indicating that the user agrees to take over. In this way, a driving risk of the vehicle can be reduced as much as possible, thereby improving safety of vehicle operation.

Optionally, the method is applied to a network side device, and the method further includes: sending indication information to the vehicle, where the indication information indicates the vehicle to exit the automated driving system. In this way, the vehicle may be notified in time to perform a corresponding operation, to improve safety of vehicle operation.

According to a second aspect, this application provides a vehicle operation determining apparatus, where the apparatus includes: an obtaining unit, configured to: obtain a preset condition to be met by a vehicle for enabling a vehicle function on a target road section, where the preset condition includes N preset elements and requirement descriptions of the N elements, and N is a positive integer; and obtain operation information of the vehicle that is traveling on the target road section based on an automated driving system, where the operation information includes M elements and collected content of a current status of the M elements, the M elements are some or all of the N elements, and M is a positive integer; and a determining unit, configured to: compare the preset condition with the operation information; and when collected content of a first element in the M elements does not match a requirement description of the first element, determine that the vehicle exits the automated driving system.

Optionally, the vehicle function includes but is not limited to an automated driving function and an assisted driving function.

For example, the preset condition includes but is not limited to a condition to be met for the vehicle function, such as an operational design condition ODC and an operational design domain ODD.

For example, the obtaining unit is specifically configured to perform at least one of the following operations:

obtain some or all of the operation information through a sensing system in the automated driving system;
obtain some or all of the operation information through a roadside device; and
obtain some or all of the operation information through a network side device.

Optionally, that the collected content of the first element does not match the requirement description of the first element is specifically any one of the following cases:

both the requirement description of the first element and the collected content of the first element are values, and the requirement description of the first element is not equal to the collected content of the first element;
both the requirement description of the first element and the collected content of the first element are character strings, and the requirement description of the first element is different from the collected content of the first element;
the requirement description of the first element is a first value range, the collected content of the first element is a first value or a second value range, and the first value is not within the first value range or the second value range is not a subset of the first value range; or
the requirement description of the first element is a first character string set, the collected content of the first element is a first character string or a second character string set, and the first character string does not belong to the first character string set or the second character string set is not a subset of the first character string set.

Optionally, the determining unit is specifically configured to compare the collected content of the M elements with the preset condition in a preset order based on priorities of the M elements.

Optionally, the determining unit is specifically configured to: compare whether collected content of each of the M elements matches a requirement description of the corresponding element, to obtain comparison results respectively corresponding to the M elements, where a second element is any one of the M elements, and when collected content of the second element matches a requirement description of the second element, a comparison result corresponding to the second element is 1; or when collected content of the second element does not match a requirement description of the second element, a comparison result corresponding to the second element is 0.

For example, when the M elements are all of the N elements, the determining unit is further configured to: when the comparison result corresponding to each of the M elements is 1, determine to keep operation of the automated driving system.

Optionally, the apparatus is a vehicle or is included in the vehicle, and the apparatus further includes a control unit, configured to: request a user of the vehicle to take over; and exit the automated driving system when receiving a confirmation reply indicating that the user agrees to take over.

Optionally, the control unit is further configured to control the vehicle to decelerate or stop before receiving the confirmation reply indicating that the user agrees to take over.

Optionally, the apparatus is a network side device or is included in the network side device, and the apparatus further includes a sending unit, configured to send indication information to the vehicle, where the indication information indicates the vehicle to exit the automated driving system.

According to a third aspect, this application provides a vehicle operation determining apparatus, where the apparatus includes a processor and a memory. The memory is configured to store program instructions, and the processor invokes the program instructions in the memory, so that the apparatus performs the method according to the first aspect or any possible implementation of the first aspect.

According to a fourth aspect, this application provides a vehicle, where the vehicle includes an automated driving system and the apparatus according to any one of the second aspect or any possible implementation of the second aspect, or includes an automated driving system and the apparatus according to the third aspect.

According to a fifth aspect, this application provides a network side device, where the device includes the apparatus according to any one of the second aspect or any possible implementation of the second aspect, or includes the apparatus according to the third aspect.

According to a sixth aspect, this application provides a computer-readable storage medium, including computer instructions. When the computer instructions are run by a processor, the method according to the first aspect or any possible implementation of the first aspect is implemented.

According to a seventh aspect, this application provides a computer program product. When the computer program product is executed by a processor, the method according to the first aspect or any possible embodiment of the first aspect is implemented. For example, the computer program product may be a software installation package. When the method provided in any possible design of the first aspect needs to be used, the computer program product may be downloaded and executed on the processor, to implement the method according to the first aspect or any one of the possible embodiments of the first aspect.

BRIEF DESCRIPTION OF DRAWINGS

FIG. 1 is a diagram of an architecture of a vehicle operation determining system according to an embodiment of this application;
FIG. 2 is a flowchart of a vehicle operation determining method according to an embodiment of this application;
FIG. 3 is a diagram of an application scenario according to an embodiment of this application;
FIG. 4 is a flowchart of another vehicle operation determining method according to an embodiment of this application;
FIG. 5 is a flowchart of another vehicle operation determining method according to an embodiment of this application;
FIG. 6 is a diagram of a structure of a communication apparatus according to an embodiment of this application; and
FIG. 7 is a diagram of a structure of a communication device according to an embodiment of this application.

DESCRIPTION OF EMBODIMENTS

It should be noted that prefix words such as "first" and "second" are used in this application only to distinguish between different described objects, and have no limitation on locations, a sequence, priorities, quantities, content, or the like of the described objects. For example, if the described objects are "fields", ordinal numbers before "field" in a "first field" and a "second field" do not limit locations or a sequence of the "fields", and "first" and "second" do not limit whether "field" modified by "first" and "field" modified by "second" are in a same message, and do not limit a sequence of the "first field" and the "second field". For another example, if the described objects are "levels", ordinal numbers before "level" in a "first level" and a "second level" do not limit priorities of "levels". For another example, a quantity of described objects is not limited by a prefix word, and may be one or more. A "first device" is used as an example. A quantity of "devices" may be one or more. In addition, objects modified by different prefix words may be the same or different. For example, if a described object is a "device", a "first device" and a "second device" may be a same device, devices of a same type, or devices of different types.

For another example, if a described object is "information", "first information" and "second information" may be information of same content or information of different content. In conclusion, in embodiments of this application, use of the prefix words used to distinguish between the described objects constitutes no limitation on the described objects. For descriptions of the described object, refer to context descriptions in claims or embodiments. Use of the prefix words should not constitute a redundant limitation.

It should be noted that, in embodiments of this application, a description manner like "at least one (or at least one piece) of a1, a2, ..., and an" is used, including a case in which any one of a1, a2, ..., and an exists alone, and also including a case of any combination of any plurality of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

For ease of understanding, the following first describes related terms that may be used in embodiments of this application.

(1) Classification of automated driving levels

Automated driving may also be referred to as intelligent driving or assisted driving, and is an important direction of intelligent development of vehicles. With development of sensing technologies and improvement of chip capabilities, intelligent driving provides more abundant driving functions for people, and gradually implements driving experience of different levels. The society of automotive engineers (society of automotive engineers, SAE) has proposed a classification standard for driving automation, including driving levels L0 to L5.

The level L0 is no automation. A human driver is fully responsible for operating a vehicle. In a traveling process, a warning or assistance may be obtained from a driving system, for example, autonomous emergency braking (autonomous emergency braking, AEB), blind spot monitoring (blind spot monitoring, BSM), or lane departure warning (lane departure warning, LDW).

The level L1 is driver assistance. A driving operation is jointly performed by a human driver and a driving system. The driving system may provide driver assistance to a steering wheel or an acceleration or deceleration operation through a driving environment. Other driving operations are performed by the human driver, for example, adaptive cruise control (adaptive cruise control, ACC) or lane keep assistance/support (lane keep assistance/support, LKA/LKS).

The level L2 is partial automation. Driver assistance is provided to a steering wheel and a plurality of functions such as acceleration or deceleration through a driving environment. Other driving actions are performed by a human driver, for example, a vehicle following function combining adaptive cruise control (adaptive cruise control, ACC) and lane keep assistance (lane keep assistance, LKA).

The level L3 is conditional automation. A driving system can complete all driving operations. However, a human driver needs to respond to a request of the driving system at proper time, that is, the human driver needs to be ready to take over the driving system.

The level L4 is high automation. A driving system can complete all driving operations. A human driver does not necessarily need to respond to a request of the driving system. For example, the human driver may not need to take over driving when road and environmental conditions permit (for example, closed campuses, highways, urban roads, or fixed driving routes).

The level L5 is full automation. Driving operations in various road and environmental conditions that a human driver is capable of coping with can all be completed by a driving system.

It can be learned that, at the levels L0 to L2, the driving system mainly provides support for the driver, and the driver still needs to perform driving supervision, and perform steering, braking, or acceleration as required, to ensure safety. At the levels L3 to L5, the driving system can replace the driver to complete all the driving operations. At the level L3, the driver needs to be ready to take over driving. At the levels L4 and L5, the driving system can implement full driving under some or all conditions. The driver may choose whether to take over driving.

The foregoing levels are an example. With technology evolution or different regulations in different countries or regions, the foregoing levels may change. For example, the vehicle automation levels proposed by the Ministry of Industry and Information Technology of China includes six levels of vehicle driving automation, where levels 0 to 2 are driver assistance, a system assists a human in performing a dynamic driving task, and a driving subject is still a driver; and levels 3 to 5 are automated driving, a system performs a dynamic driving task in place of a human in an operational design condition, and a driving subject is the system when a function is activated. Names and definitions of the levels are as follows: A level-0 driving automation (emergency assistance, emergency assistance) system cannot continuously perform horizontal or vertical motion control on a vehicle in a dynamic driving task, but has a capability of continuously detecting and responding to some targets and events in the dynamic driving task. A level-1 driving automation (partial driver assistance, partial driver assistance) system continuously performs horizontal or vertical motion control on a vehicle in a dynamic driving task under an operational design condition (operational design condition, ODC) or an operational design domain (operational domain design, ODD) of the system, and has a capability of detecting and responding to some targets and events that adapt to the horizontal or vertical motion control performed on the vehicle. A level-2 driving automation (combined driver assistance, combined driver assistance) system continuously performs horizontal and vertical motion control on a vehicle in a dynamic driving task under an operational design condition of the system, and has a capability of detecting and responding to some targets and events that adapt to the horizontal and vertical motion control performed on the vehicle. A level-3 driving automation (conditionally automated driving, conditionally automated driving) system continuously executes all dynamic driving tasks under an operational design condition. A level-4 driving automation (highly automated driving, highly automated driving) system continuously executes all dynamic driving tasks and automatically performs a minimum risk strategy under an operational design condition of the system. A level-5 driving automation (fully automated driving, fully automated driving) system continuously executes all dynamic driving tasks and automatically performs a minimum risk strategy under any traveling condition. The horizontal control is mainly used for vehicle steering control, for example, controlling torque or an angle of a steering wheel to control a direction of the vehicle. The vertical control is mainly used for vehicle speed control, for example, controlling a braking pedal, an acceleration pedal, or a gear to control acceleration/deceleration, braking, or the like of the vehicle.

It may be understood that regardless of which classification manner is used, descriptions in embodiments of this application may be applied to different classification cases.

(2) Operational design domain ODD

The operational design domain (operational domain design, ODD) is an external environmental condition that is determined when an automated driving system is designed and that is applicable to operation of functions of the automated driving system. For example, a specified condition may include a geographical location, a road type, a speed range, weather, time, national and local traffic laws and regulations, and the like. A highway pilot (highway pilot, HWP) is used as an example. The system recognizes that the vehicle is within the ODD (for example, the vehicle is currently traveling on a highway, the weather is clear, the vehicle is at an appropriate speed, a lighting condition is good, and a global positioning system (global positioning system, GPS) has stable signals), and the HWP system continuously executes all the dynamic driving tasks after a driver confirms that the system is activated.

(3) Operational design condition ODC

The operational design condition (operational design condition, ODC) is a general term of various conditions that are determined when an automated driving system is designed and that are applicable to operation of functions of the automated driving system, including an operational design domain ODD and an internal condition that is further to be met for safe startup and operation of the system, for example, a vehicle status, a driver/passenger status, and another necessary condition, such as a traffic condition and an operation condition.

ODDs of different automated driving systems are different. For example, in an automated driving system at a high speed, a system A can be started and run only in the daytime, and a system B can be started and run in the daytime and at a sunny night.

The vehicle status includes a vehicle speed and a function status, where the function status includes a software and hardware status. The vehicle speed includes an activation speed range, and whether the current automated driving system can be activated is determined through the activation speed range. Before the safe startup and operation of the automated driving system, the vehicle status need to meet a condition for the safe startup and operation of the automated driving system. For example, the automated driving system at the high speed needs to have a function self-check capability, and needs to perform a function self-check before startup. A sensing function status, a positioning function status, and a calculation function status need to meet a system design requirement.

The driver/passenger include a backup user and passenger for a driver/dynamic driving task. The driver/passenger status includes a status attribute of monitoring the backup user and passenger for the driver/dynamic driving task. For example, whether the driver is fatigued, is drunk driving, or wears a safety belt is monitored. In this way, whether the vehicle has a driving risk can be determined. For another example, whether the backup user for the dynamic driving task is in a fatigue status, a drunk driving status, or the like is monitored, to determine whether the backup user for the dynamic driving task can take over. For another example, whether the passenger has a behavior of attempting to seize an automated driving device is monitored, so that whether the current automated driving system can run safely can be determined.

(4) Dynamic driving task DDT

The dynamic driving task (dynamic driving task, DDT) means all actions required for driving a vehicle, including sensing, decision-making, and execution (horizontal/vertical motion control of the vehicle), excluding a strategic function (such as trip planning, destination and route selection, and the like).

The following describes technical solutions of this application with reference to accompanying drawings.

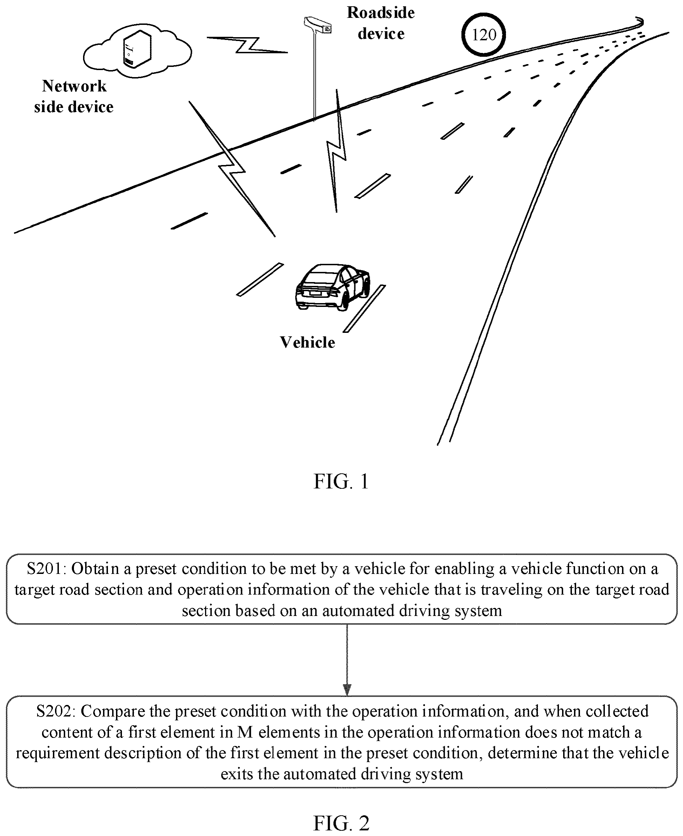

FIG. 1 is a diagram of an architecture of a vehicle operation determining system according to an embodiment of this application. As shown in FIG. 1, the system includes a vehicle, a network side device, and a roadside device. Communication may be performed in a wireless manner between the vehicle and the network side device, between the vehicle and the roadside device, and between the network side device and the roadside device.

The network side device may be, for example, a server (for example, a server or a cloud platform for vehicle operation determining) deployed on a network side, or a component or a chip in the server. The network side device may be deployed in a cloud environment, that is, may be a cloud computing server, or the network side device may be deployed in an edge environment, that is, may be an edge computing server. The network side device may be an integrated device, or may be a plurality of distributed devices. This is not specifically limited in embodiments of this application.

The roadside device is an apparatus that can communicate with the vehicle by using a V2X technology. The roadside device may be, for example, an apparatus such as a roadside unit (roadside unit, RSU), multi-access edge computing (multi-access edge computing, MEC), or a sensor, or a component or a chip inside these apparatuses. The sensor includes at least one of a lidar, a millimeter-wave radar, an image shooting apparatus, a roadside speed measurement apparatus, and the like. In some possible embodiments, the roadside device may alternatively be a system-level device including a plurality of components such as an RSU, MEC, and a sensor. This is not specifically limited herein.

Herein, the vehicle is an automated driving vehicle, that is, the vehicle is configured with an automated driving system, and the automated driving system may independently perform some driving operations. Depending on different power sources of the vehicle, the vehicle may be, for example, a new energy vehicle or a conventional vehicle. The conventional vehicle means a fuel vehicle, for example, may be a gasoline vehicle or a diesel vehicle. The new energy vehicle may be, for example, an electric vehicle (electric vehicle, EV), a hybrid electric vehicle (hybrid electric vehicle, HEV), a range extended electric vehicle (range extended EV), a plug-in hybrid electric vehicle (Plug-in HEV), a fuel cell vehicle, or another new energy vehicle. This is not specifically limited herein.

The sensing system in the automated driving system of the vehicle includes several sensors for sensing information about an environment in which the vehicle is located. For example, the sensing system includes one or more of a positioning system (for example, the positioning system may be a global positioning system GPS, a BeiDou system, or another positioning system), an inertia measurement unit (inertial measurement unit, IMU), a radar, a laser rangefinder, a camera, and the like. In some possible embodiments, the camera in the sensing system may be further configured to monitor the driver/passenger to obtain a driver/passenger status. A driving speed of the vehicle may be accurately obtained based on the positioning system and the IMU. It may be understood that the sensing system may communicate with a processing apparatus in the vehicle in a wired and/or wireless manner. The processing apparatus may be, for example, a software and hardware integrated platform supporting vehicle body control and chassis control, for example, a vehicle domain controller (vehicle domain controller, VDC), or may be a software and hardware integrated platform (that is, a vehicle-mounted computing platform) supporting intelligent driving, for example, a mobile data center (mobile data center, MDC), an advanced driving assistance system domain controller (advanced driving assistance system domain controller, ADAS DC), or an automatic drive domain controller (automatic drive domain controller, AD DC).

A vehicle operation determining method provided in an embodiment of this application may be applied to the foregoing network side device or vehicle.

In an implementation, when the vehicle operation determining method is applied to the vehicle, the vehicle obtains a preset condition to be met by the vehicle for enabling a vehicle function on a target road section and operation information of the vehicle that is traveling on the target road section based on the automated driving system. The preset condition includes N preset elements and requirement descriptions of the N elements. The operation information includes M elements and collected content of a current status of the M elements. The M elements are some or all of the N elements, and N and M are positive integers. The preset condition is compared with the operation information, and when the collected content of a first element in the M elements does not match the requirement description of the first element, it is determined that the vehicle exits the automated driving system. In some possible embodiments, when it is determined to exit the automated driving system, the vehicle may further request a user of the vehicle to take over.

Herein, the preset condition is prior information. The operation information may be some or all information that the vehicle obtains from the sensing system of the vehicle, and/or some or all information that the vehicle obtains from at least one data source end of the network side device and the roadside device. For a specific process of the foregoing determining, refer to related descriptions in the following embodiments. Details are not described herein again.

In an implementation, when the vehicle operation determining method is applied to the network side device, refer to the foregoing descriptions of the application to the vehicle. However, unlike in the application to the vehicle, in this case, when the network side device determines that the vehicle exits the automated driving system, the network side device further sends indication information to the vehicle, where the indication information indicates the vehicle to exit the automated driving system. Herein, the network side device obtains some or all of the operation information from the vehicle, and/or obtains some or all of the operation information from at least one data source end of the network side device and the roadside device. For a specific process of vehicle operation determining, refer to related descriptions in the following embodiments. Details are not described herein again.

In some possible embodiments, the preset condition and some of the operation information may alternatively be provided by a map server (for example, a high-precision map server) or a high-precision map of the vehicle.

The vehicle operation determining system shown in FIG. 1 may be applied to a plurality of network types, for example, may be applied to one or more of the following network types: SparkLink (SparkLink), a long term evolution (long term evolution, LTE) network, a fifth generation mobile communication technology (5th generation mobile communication technology, 5G), a wireless local area network (for example, Wi-Fi), Bluetooth (Bluetooth, BT), ZigBee (ZigBee), or a vehicle-mounted short-range wireless communication network.

It should be noted that FIG. 1 is merely an example diagram of the architecture, but a quantity of network elements included in the system shown in FIG. 1 is not limited. Although not shown in FIG. 1, another functional entity may be further included in FIG. 1 in addition to the functional entities shown in FIG. 1. In addition, the method provided in this embodiment of this application may be applied to the system shown in FIG. 1. Certainly, the method provided in this embodiment of this application may also be applied to another vehicle operation determining system. This is not limited in embodiments of this application.

FIG. 2 is a flowchart of a vehicle operation determining method according to an embodiment of this application. The method is applied to a first device. The first device may be, for example, the network side device in FIG. 1, or the processing apparatus of the vehicle in FIG. 1, or may be a component or a chip in the network side device or the processing apparatus. The method includes but is not limited to the following steps.

S201: Obtain a preset condition to be met by the vehicle for enabling a vehicle function on a target road section and operation information of the vehicle that is traveling on the target road section based on an automated driving system.

The preset condition includes N preset elements and requirement descriptions of the N elements. The operation information includes M elements and collected content of the M elements. The M elements are some or all of the N elements, and N and M are positive integers.

Herein, for specific descriptions of the element and the requirement description of the element, refer to the foregoing descriptions of corresponding content. Details are not described herein again.

In different scenarios, definitions of the target road section may be different. For example, in a high-speed navigation automated driving scenario, the target road section may be at least one section of road on a highway or at least one section of road on an urban expressway. For another example, in a memory parking scenario, the target road section may be at least one section of road from a start location of the vehicle to a parking space in an outdoor parking lot, or at least one section of road from a start location of the vehicle to a parking space in an indoor parking lot.

Herein, the preset condition is prior information, and the preset condition is related to a model of the vehicle and the target road section.

The preset condition may be obtained in any one of the following manners.

In an implementation, the preset condition may be obtained by the first device by searching a prior database based on a mapping relationship between the model of the vehicle and a feature of the target road section. The feature of the target road section may be, for example, geographical location information of the target road section or a sign of the target road section. The prior database may be pre-stored locally in the first device, or may be obtained by the first device from another device (for example, a cloud server).

For example, the prior database is developed and obtained based on expert experience and/or a designer of the automated driving system.

In an implementation, the preset condition may be obtained by the first device based on at least one of the following information: historical data of the vehicle that is traveling on the target road section, data (including one or more of vehicle traveling data, external environment information, and status data of a driver/passenger in the vehicle) collected by a sensing system of the vehicle on the target road section, static road data corresponding to the target road section, and a preset necessary condition. Herein, some or all of the information listed in this implementation may come from one or more of the vehicle, a roadside device, and a network side device.

For example, the preset condition includes but is not limited to an operational design condition ODC and an operational design domain ODD. For specific descriptions of the ODC and the ODD, refer to the foregoing descriptions of corresponding terms. Details are not described herein again. In some possible embodiments, the preset condition may alternatively be vehicle status information, driver/passenger status information, or the like. For details, refer to the foregoing descriptions of corresponding content in the term "operational design condition ODC".

The operation information may be obtained by the first device at any moment in a process in which the vehicle travels on the target road section.

In some possible embodiments, a quantity of elements included in the operation information is less than a quantity of elements included in the preset condition. An application scenario may be as follows: A collection device corresponding to some elements in the N preset elements may currently not be woken up at a collection moment corresponding to the operation information, or some elements in the N preset elements are not collected at a collection moment corresponding to the operation information.

Obtaining the operation information includes at least one of the following manners:

obtaining some or all of the operation information through the sensing system in the automated driving system;
obtaining some or all of the operation information through the roadside device; and
obtaining some or all of the operation information through the network side device.

Herein, for details of the sensing system, the roadside device, and the network side device, refer to descriptions of corresponding content in the embodiment of FIG. 1.

For example, the information obtained through the sensing system in the automated driving system includes at least one of the following: a current driving speed of the vehicle, a function status of the vehicle, status information of a driver/passenger in the vehicle (for example, whether the driver/passenger is fatigued, is drunk driving, wears a safety belt, has a behavior of seizing an automated driving device, or the like), a weather condition (for example, wind, rain, snow, sleet, a temperature, or the like) corresponding to the target road section, lighting information corresponding to the target road section, road information (for example, a road type, a road surface, a road edge, road geometry, or the like) corresponding to the target road section, a road surface condition (for example, water accumulation, snow accumulation, ice formation, water flooding, or the like) corresponding to the target road section, a road user corresponding to the target road section, a sign/marking corresponding to the target road section, and the like.

For example, the information obtained through the roadside device includes at least one of the following: a driving speed of the vehicle passing the roadside device, status information of a driver/passenger in the vehicle, and a weather condition, road information, a road surface condition, a road user, a surrounding sign/marking, and the like that are corresponding to the target road section.

For example, the information obtained through the network side device includes at least one of the following: a weather condition, lighting information, road information, a road surface condition, a road user, a surrounding sign/-marking, and the like that are corresponding to the target road section.

For example, some or all of the operation information may be directly collected by at least one of the vehicle, the roadside device, and the network side device. For example, the driving speed of the vehicle may be directly measured by a wheel speed sensor in the vehicle, or may be directly measured by a roadside speed measurement apparatus.

For example, some or all of the operation information may alternatively be obtained by at least one of the vehicle, the roadside device, and the network side device by performing analysis based on raw data collected by the vehicle, the roadside device, or the network side device.

For example, an image shooting apparatus in the sensing system monitors a fatigue degree of the driver. The image shooting apparatus monitors the driver to obtain a plurality of images that include a face of the driver and that are collected within preset duration. When the image shooting apparatus has a processing capability, the image shooting apparatus estimates eye closure time and/or yawning time of the driver within the preset duration based on the plurality of images that include the face of the driver, to determine the fatigue degree of the driver. When the image shooting apparatus does not have a processing capability, in an implementation, the image shooting apparatus may send, to the first device, the plurality of collected images that include the face of the driver, and the first device processes the plurality of images that include the face of the driver to determine the fatigue degree of the driver. In another implementation, the image shooting apparatus may send, to a processing apparatus of the vehicle, the plurality of collected images that include the face of the driver, and the processing apparatus processes the images that include the face of the driver to determine the fatigue degree of the driver, and sends a result to the first device.

In this embodiment of this application, a requirement description of any one of the N elements in the preset condition may be any one of the following cases: a value, a value range, a character, a character string, a character string set, or a text. Similarly, collected content of any one of the M elements in the operation information may be specifically any one of the following cases: a value, a value range, a character, a character string, a character string set, or a text.

S202: Compare the preset condition with the operation information, and when collected content of a first element in the M elements in the operation information does not match a requirement description of the first element in the preset condition, determine that the vehicle exits the automated driving system.

That the collected content of the first element does not match the requirement description of the first element is any one of the following cases:

(1) both the requirement description of the first element and the collected content of the first element are values, and the requirement description of the first element is not equal to the collected content of the first element;
(2) both the requirement description of the first element and the collected content of the first element are character strings, and the requirement description of the first element is different from the collected content of the first element;
(3) the requirement description of the first element is a first value range, the collected content of the first element is a first value or a second value range, and the first value is not within the first value range or the second value range is not a subset of the first value range; or

(4) the requirement description of the first element is a first character string set, the collected content of the first element is a first character string or a second character string set, and the first character string does not belong to the first character string set or the second character string set is not a subset of the first character string set.

In some possible embodiments, that the collected content of the first element does not match the requirement description of the first element may alternatively be as follows: Both the requirement description of the first element and the collected content of the first element are characters, and the requirement description of the first element is different from the collected content of the first element; or both the requirement description of the first element and the collected content of the first element are texts, and the requirement description of the first element is different from the collected content of the first element.

It may be understood that, if the collected content of the first element in the operation information does not match the requirement description of the first element in the preset condition, it indicates that the automated driving system of the vehicle is not in a safe operation range on the target road section, and there is a risk that a dynamic driving task is still executed by the automated driving system of the vehicle that is currently traveling on the target road section. For safety, it is advisable to exit the automated driving system and switch to control by a natural person driver to improve safety of vehicle operation.

In this embodiment of this application, comparing the preset condition with the operation information is specifically as follows: sequentially comparing, based on the M elements in the operation information, whether collected content of each element in the operation information matches a requirement description of the element in the preset condition.

In an implementation, whether the collected content of each element in the operation information matches the requirement description of the element in the preset condition may be indicated by using a comparison result corresponding to the element.

A second element is used as an example. The second element is any one of the M elements. When collected content of the second element matches a requirement description of the second element, a comparison result corresponding to the second element is 1. When collected content of the second element matches a requirement description of the second element, a comparison result corresponding to the second element is 0.

Further, when the collected content of the first element in the M elements does not match the requirement description of the first element, determining to exit the automated driving system includes: when a comparison result corresponding to the first element in the M elements is 0, determining to exit the automated driving system.

It may be understood that, if the first element is one element, when it is determined that the collected content of the first element in the M elements does not match the requirement description of the element, the foregoing comparison procedure may be exited. In this way, if the first element is not the last element in the M elements, it can be determined, without performing M comparisons, whether the automated driving system of the vehicle needs to exit. This manner can improve data processing efficiency especially during serial processing.

For example, unlike the determining that the collected content of the first element does not match the requirement description of the first element, that the collected content of the second element matches the requirement description of the second element may be specifically any one of the following cases:

(1) both the requirement description of the second element and the collected content of the second element are values, and the requirement description of the second element is equal to the collected content of the second element;
(2) both the requirement description of the second element and the collected content of the second element are character strings, characters, or texts, and the requirement description of the second element is the same as the collected content of the second element;
(3) the requirement description of the second element is a first value range, the collected content of the second element is a first value or a second value range, and the first value is within the first value range or the second value range is a subset of the first value range; or
(4) the requirement description of the second element is a first character string set, the collected content of the second element is a first character string or a second character string set, and the first character string belongs to the first character string set or the second character string set is a subset of the first character string set.

In some possible embodiments, after the preset condition is compared with the operation information, a statistical result is further obtained, where the statistical result is related to the comparison result corresponding to each of the M elements. The comparison result corresponding to an $i^{th}$ element indicates whether the collected content of the $i^{th}$ element matches the requirement description of the $i^{th}$ element, and i is a positive integer less than or equal to M. When the statistical result meets the preset condition, it is determined to exit the automated driving system.

For example, when the comparison result corresponding to the $i^{th}$ element is 1, the comparison result corresponding to the i<sup>th</sup> element indicates that the collected content of the i<sup>th</sup> element matches the requirement description of the i<sup>th</sup> element. When the comparison result corresponding to the i<sup>th</sup> element is 0, the comparison result corresponding to the i<sup>th</sup> element indicates that the collected content of the i<sup>th</sup> element does not match the requirement description of the i<sup>th</sup> element.

In an implementation, the statistical result may be obtained by processing, using a binary decision tree (binary decision diagram, BDD), the comparison results respectively corresponding to the M elements. The BDD is a data structure used to implicitly represent a Boolean function. Specifically, when the comparison result corresponding to each of the M elements is used as a variable of the BDD, the statistical result is a function value of the BDD. In other words, the statistical result is a product of the comparison results respectively corresponding to the M elements.

Further, based on a definition of the comparison result corresponding to the i<sup>th</sup> element, when the statistical result meets the preset condition, the determining that the vehicle exits the automated driving system includes: when the statistical result is 0, determining to exit the automated driving system.

For example, a relationship between the statistical result and variable values respectively corresponding to the M elements meets the following formula (1):

$$f(x_1, x_2, ..., x_M) = x_1 * x_2 * ... * x_M \qquad \text{Formula (1)}$$

f() represents the statistical result, and $x_1$, $x_2$, ..., $x_M$ represents the comparison results respectively corresponding to the M elements. For example, $x_1$ represents the comparison result corresponding to the 1<sup>st</sup> element in the M elements. f() may alternatively be understood as the function value of the BDD, and $x_1$, $x_2$, ..., $x_M$ are M variables of the BDD function, where a value of any one of the M variables is 0 or 1.

In another implementation, based on a definition of the comparison result corresponding to the i<sup>th</sup> element, the statistical result may alternatively be a quantity of elements whose comparison results are 0 in the M elements. In this case, when the statistical result meets the preset condition, the determining to exit the automated driving system includes: when the statistical result is greater than or equal to 1, determining to exit the automated driving system.

In this embodiment of this application, in comparing whether the collected content of each of the M elements matches the requirement description of the element, the collected content of the M elements may be compared with the preset condition in a preset order based on priorities of the M elements. Herein, the priorities of the M elements are preset.

For example, the elements can be classified into a specific type, a logical type, and an abstract type.

An element of the specific type means that both a requirement description and collected content of the element are a specific value, a character, or a character string. In this case, a comparison between collected content and requirement descriptions of elements of this type is represented as a comparison between values, or a comparison between characters, or a comparison between character strings.

For example, the element of the logical type may alternatively be an element such as a "vehicle speed", a "vehicle door", a "sensing function", a "positioning function", a "road", or a "driver seat belt status".

For example, requirement descriptions of some elements of the specific type are a "yes/no" representation. For example, the "vehicle door" has two statuses: open and closed, the "sensing function" or the "positioning function" has two statuses: normal and abnormal, and the "driver seat belt status" has two statuses: wear and not wear. In this case, a requirement description of a corresponding element may be a character or a character string to indicate any status of the element.

An element of the logical type means that a requirement description of the element is a value range or a character string set. In this case, a comparison between collected content and requirement descriptions of elements of this type is represented as any one of the following: a comparison between value ranges, a comparison between a value and a value range, a comparison between a character string and a character string set, or a comparison between character string sets.

Herein, a same element may be of different types in different application scenarios. For example, for the element "vehicle speed", in an application scenario 1, if a requirement description of the "vehicle speed" is a value, the "vehicle speed" is an element of the specific type; or in an application scenario 2, if a requirement description of the "vehicle speed" is a value range, the "vehicle speed" is an element of the logical type.

For example, the element of the logical type may alternatively be an element such as an "activation vehicle speed range", a "quantity of lanes", a "lane direction", "lighting", "rainfall", and a "road user".

An element of the abstract type means that a representation of the element cannot be directly obtained and needs to be represented by a value, text, a character string, or a character string set after analysis and processing.

For example, for the element "driver fatigue status", the driver fatigue status may be determined by analyzing yawning time or a frequency and duration of eye closure of the driver within preset duration based on a plurality of images that include a face of the driver. Herein, the driver fatigue status may be classified into, for example, two statuses: fatigue and non-fatigue. Further, a fatigue degree may be classified into several levels.

For another example, for the element "lane line", comparative analysis may be performed on a high-precision map and a consecutive plurality of collected images that include a lane line on a road surface, to determine whether the lane line is clear.

For example, the element of the abstract type may alternatively be an element such as a "driver pose status" or a "road surface".

Further, elements of different types have different priorities, and a corresponding preset order is also different. For example, the preset order of different types is as follows: The element of the specific type has a priority over the element of the abstract type, and the element of the abstract type has a priority over the element of the logical type. In this way, comparison efficiency can be improved, which helps improve vehicle operation determining efficiency.

For example, a preset order of elements of a same type may be the same or may be different. This is not specifically limited herein.

For example, M=6, and the M elements in the operation information include elements a1, a2, ..., and a6, where a5 and a6 are elements of the specific type, a3 and a4 are elements of the logical type, and a1 and a2 are elements of the abstract type. Priority information indicates that a preset order of the M elements is a1<a2<a3<a4<a5<a6, that is, a6, a5, a4, a3, a2, and a1 are sequentially compared.

For example, a preset order of an element may be indicated by using a field, a binary value, or the like. For example, when the preset order of the element is a first value, it indicates that the element is the first to be compared; when the preset order of the element is a second value, it indicates that the element is the second to be compared; when the preset order of the element is a third value, it indicates that the element is the third to be compared; .... Herein, the first value, the second value, the third value, ... may be in descending order starting from M, or may be in ascending order starting from 1, or may be another sorting value.

In an implementation, when the M elements in the operation information are compared based on a preset order, the statistical result may be obtained by processing, using an ordered binary decision tree (ordered binary decision diagram, OBDD), the comparison results respectively corresponding to the M elements. The OBDD is an ordered OBB. Specifically, the M elements are traversed based on the priority information to sequentially obtain the comparison results respectively corresponding to the M elements. When the comparison result corresponding to each of the M elements is used as a variable of the OBDD, and the statistical result is a function value of the OBDD, where the statistical result is a product of the comparison results respectively corresponding to the M elements. Correspondingly, based on a definition of the comparison result corresponding to the $i^{th}$ element, when the statistical result meets the preset condition, the determining to exit the automated driving system includes: when the statistical result is 0, determining that the vehicle exits the automated driving system.

In some possible embodiments, when the M elements are all of the N elements, if the statistical result is not 0 (that is, 1), the automated driving system continues to operate.

The following uses a specific scenario to illustrate an application of the foregoing method embodiment.

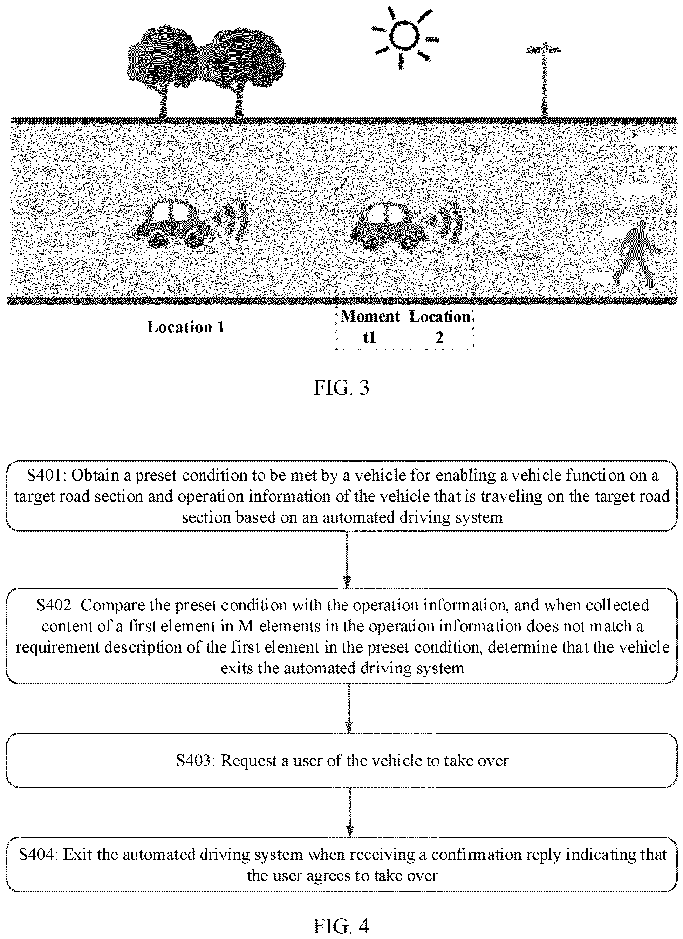

FIG. 3 is a diagram of a scenario according to an embodiment of this application. In FIG. 3, it is assumed that a vehicle travels on a highway (that is, a target road section), and the vehicle travels to a location 2 at a moment t1. For a preset condition to be met by the vehicle for enabling a vehicle function on a highway section, refer to the following Table 1. For operation information obtained at the moment t1, refer to the following Table 2.

Table 1

| No. | Preset element | Requirement description |
|---|---|---|
| 1 | Lane direction | Drive on the right |
| 2 | Road | Highway |
| 3 | Road surface | Dry |
| 4 | Lane line | Clear |
| 5 | Quantity of lanes | >2 |
| 6 | Lighting | >500 lux |
| 7 | Road user | No pedestrian |
| 8 | Vehicle speed | 60 km/h to 120 km/h |
| 9 | Driver fatigue status | Non-fatigue |
| 10 | Driver pose status | In the driver seat |
| 11 | Driver seat belt status | Wear |
| 12 | Vehicle door | Closed |

(continued)

| No. | Preset element | Requirement description |
|---|---|---|
| 13 | Sensing function | Normal |
| 14 | Positioning function | Normal |

Table 2

| No. | Element | Collected content |
|---|---|---|
| 1 | Lane direction | Drive on the right |
| 2 | Road | Highway |
| 3 | Road surface | Dry |
| 4 | Lane line | Unclear |
| 5 | Quantity of lanes | 4 |
| 6 | Lighting | 1000 lux |
| 7 | Road user | Pedestrian |
| 8 | Vehicle speed | 80 km/h |
| 9 | Driver fatigue status | Non-fatigue |
| 10 | Driver pose status | In the driver seat |
| 11 | Driver seat belt status | Wear |
| 12 | Vehicle door | Closed |
| 13 | Sensing function | Normal |
| 14 | Positioning function | Normal |

Table 1 mainly shows a correspondence between a preset element and a requirement description of the element. It can be learned from Table 1 that the preset condition includes 14 preset elements and requirement descriptions respectively corresponding to the 14 elements. The 14 preset elements are respectively the lane direction, the road, the road surface, the lane line, the quantity of lanes, the lighting, the road user, the vehicle speed, the driver fatigue status, the driver pose status, the driver seat belt status, the vehicle door, the sensing function, and the positioning function. The element "vehicle speed" is used as an example. It can be learned from Table 1 that the requirement description of the "vehicle speed" is 60 km/h to 120 km/h. For requirement descriptions of remaining elements in Table 1, refer to the corresponding correspondence in Table 1. Details are not described herein again.

Table 2 mainly shows a correspondence between a monitored element and collected content of the element. It can be learned from Table 2 that the operation information includes the 14 preset elements and the collected content corresponding to the 14 elements. For details about the collected content of each element, refer to the corresponding correspondence in Table 2. Details are not described herein again.

Based on Table 1 and Table 2 and the foregoing determining basis for mismatch, it can be learned that the collected content of the element "lane line" does not match the requirement description of this element, and the collected content of the element "road user" does not match the requirement description of this element.

The following performs vehicle operation determining based on the preset condition shown in Table 1 and the operation information shown in Table 2. There are mainly the following manners.

Manner 1: Random comparison is performed. When the collected content of the first element does not match the requirement description of the first element, it is determined that the vehicle exits the automated driving system.

Specifically, because a comparison order is random, when the element "lane line" or "road user" is randomly selected, it may be determined to exit the automated driving system after the collected content of the element is compared with the requirement description of the element.

Manner 2: Comparison is performed in a preset order. When the collected content of the first element does not match the requirement description of the first element, it is determined that the vehicle exits the automated driving system.

Specifically, it is assumed that the preset order is a number of an element in Table 1 or Table 2, and a smaller number indicates a higher comparison order of an element corresponding to the number. In this case, the element "lane direction" is compared first, and the element "positioning function" is compared last. In this case, comparison of the 4th

element is performed, and it can be learned that the collected content "unclear" of the "lane line" does not match the requirement description "clear". Therefore, it may be determined to exit the automated driving system. It may be understood that, for the 14 preset elements, it may be determined to exit the automated driving system after only four elements are compared, and the subsequent 10 elements do not need to be compared, thereby improving efficiency of determining to exit or disable the automated driving system.

Manner 3: The BDD is used. When the statistical result is 0, it is determined to exit the automated driving system.

Specifically, whether the collected content of the 14 preset elements matches the corresponding requirement descriptions is compared, to obtain a comparison result corresponding to each element. It may be learned that in the 14 preset elements, only the comparison result corresponding to the element "lane line" and the comparison result corresponding to the element "road user" are 0, and the comparison results corresponding to other remaining elements are all 1. When the BDD is used, the statistical result is a product of the comparison results respectively corresponding to elements in the M preset elements. Therefore, the statistical result is 0, and it is determined to exit the automated driving system.

Manner 4: The OBDD is used. When the statistical result is 0, it is determined to exit the automated driving system. Unlike in Manner 3, comparison of the 14 preset elements is performed based on a preset order. The preset order may be indicated by the priority information. Details are not described herein again.

It can be learned that, according to this embodiment of this application, efficiency of determining to exit or disable the automated driving system of the vehicle can be improved, thereby helping improve safety of vehicle operation.

FIG. 4 is a flowchart of another vehicle operation determining method according to an embodiment of this application. The method is applied to a vehicle or a processing apparatus in the vehicle. The method includes but is not limited to the following steps.

S401: Obtain a preset condition to be met by the vehicle for enabling a vehicle function on a target road section and operation information of the vehicle that is traveling on the target road section based on an automated driving system.

S402: Compare the preset condition with the operation information, and when collected content of a first element in M elements in the operation information does not match a requirement description of the first element in the preset condition, determine that the vehicle exits the automated driving system.

Herein, for details of steps S401 and S402, refer to descriptions of S201 and S202 in the embodiment in FIG. 2. Details are not described herein again.

S403: Request a user of the vehicle to take over.

Herein, the user of the vehicle may be, for example, a driver currently sitting in a driver seat in the vehicle, a passenger in the vehicle, a backup user for a dynamic driving task, or another natural person driver in the vehicle who can currently take over the vehicle.

For example, requesting the user of the vehicle to take over includes at least one of the following manners:

requesting the user of the vehicle to take over through a display apparatus of the vehicle;
requesting the user of the vehicle to take over through a voice prompt;
requesting the user of the vehicle to take over through an application message prompt; and
requesting the user of the vehicle to take over through a terminal of the user.

Herein, the display apparatus of the vehicle may be, for example, a vehicle infotainment tablet, a vehicle-mounted display, a head up display (head up display, HUD) system, or the like. The terminal of the user may be, for example, a portable device such as a mobile phone, a tablet, or an intelligent wearable device (for example, a headset, glasses, or a smartwatch) of the user.

For example, requesting the user of the vehicle to take over through the terminal of the user may be: controlling the terminal of the user to vibrate or ring to remind the user to take over a driving task of the vehicle.

S404: Exit the automated driving system when receiving a confirmation reply indicating that the user agrees to take over.

Specifically, feedback information of the user is received, where the feedback information indicates that the user agrees to take over. In response to the feedback information, the automated driving system is exited.

In some possible embodiments, the vehicle is controlled to decelerate or stop before the confirmation reply indicating that the user agrees to take over is received. In this way, a driving risk of the vehicle can be reduced as much as possible, thereby improving safety of vehicle operation.

It can be learned that, according to this embodiment of this application, when the vehicle determines to exit the automated driving system, a decision can be made in time to request the user of the vehicle to take over the vehicle, thereby improving safety of vehicle operation.

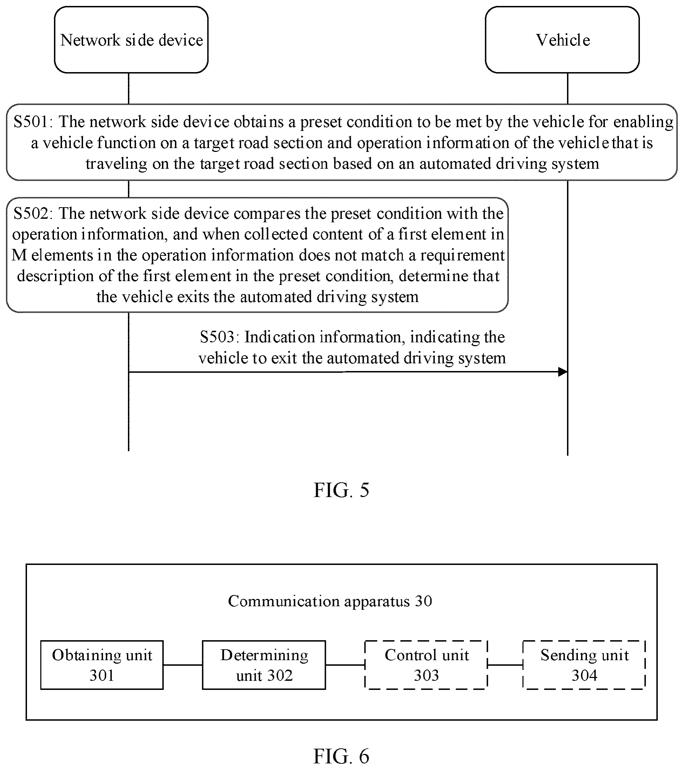

FIG. 5 is a flowchart of another vehicle operation determining method according to an embodiment of this application. The method is applied to a network side device or a component in the network side device. The method includes but is not limited to the following steps.

S501: The network side device obtains a preset condition to be met by a vehicle for enabling a vehicle function on a target road section and operation information of the vehicle that is traveling on the target road section based on an automated driving system.

S502: The network side device compares the preset condition with the operation information, and when collected content of a first element in M elements in the operation information does not match a requirement description of the first element in the preset condition, determine that the vehicle exits the automated driving system.

Herein, for details of steps S501 and S502, refer to descriptions of S201 and S202 in the embodiment in FIG. 2. Details are not described herein again.

S503: The network side device sends indication information to the vehicle, where the indication information indicates the vehicle to exit the automated driving system.

Correspondingly, the vehicle receives the indication information sent by the network device, and exits the automated driving system based on the indication information.

For example, after receiving the indication information, the vehicle may further perform S403 and S404 in the embodiment in FIG. 4.

It can be learned that, in this embodiment of this application, when determining that the automated driving system of the vehicle is exited, the network side device may indicate the vehicle to perform a corresponding operation in time, to improve safety of vehicle operation.

FIG. 6 is a diagram of a structure of a communication apparatus according to an embodiment of this application. The communication apparatus 30 includes an obtaining unit 301 and a determining unit 302. The communication apparatus 30 may be implemented by hardware, software, or a combination of software and hardware.

The obtaining unit 301 is configured to: obtain a preset condition to be met by a vehicle for enabling a vehicle function on a target road section, where the preset condition includes N preset elements and requirement descriptions of the N elements, and N is a positive integer; and obtain operation information of the vehicle that is traveling on the target road section based on an automated driving system, where the operation information includes M elements and collected content of a current status of the M elements, the M elements are some or all of the N elements, and M is a positive integer. The determining unit 302 is configured to: compare the preset condition with the operation information; and when the collected content of a first element in the M elements does not match the requirement description of the first element, determine that the vehicle exits the automated driving system.

The communication apparatus 30 may be configured to implement the method described in the embodiment in FIG. 2. In the embodiment in FIG. 2, the obtaining unit 301 may be configured to perform S201, and the determining unit 302 may be configured to perform S202. The communication apparatus 30 may be further configured to implement the methods described in embodiments in FIG. 4 and FIG. 5.

In an implementation, when the communication apparatus 30 is configured to implement the method described in the embodiment in FIG. 4, the apparatus further includes a control unit 303, where the control unit 303 is configured to request a driver of the vehicle to take over. In the embodiment in FIG. 4, the obtaining unit 301 may be configured to perform S401, the determining unit 302 may be configured to perform S402, and the control unit 303 may be configured to perform S403 and S404.

In another implementation, when the communication apparatus 30 is configured to implement the method described in the embodiment in FIG. 5, the apparatus further includes a sending unit 304, where the sending unit 304 is configured to send indication information to the vehicle. The indication information indicates the vehicle to exit the automated driving system. In the embodiment in FIG. 5, the obtaining unit 301 may be configured to perform S501, the determining unit 302 may be configured to perform S502, and the sending unit 304 may be configured to perform S503.

It should be understood that division into the units of the foregoing communication apparatus 30 is merely logical function division. During actual implementation, all or some of the units may be integrated into one physical entity, or may be physically separated. In addition, a unit in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or to implement functions of the units in the apparatus. The processor is, for example, a general-purpose processor, such as a central processing unit (central processing unit, CPU) or a microprocessor, and the memory is a memory in the apparatus or a memory outside the apparatus. Alternatively, the unit in the apparatus may be implemented in a form of a hardware circuit, and the hardware circuit may be designed to implement functions of some or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement the functions of some or all of the units. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of some or all of the units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having an instruction reading and operation capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function through a logical relationship of a hardware circuit. The logical relationship of the hardware circuit is fixed or may be reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, the units are integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

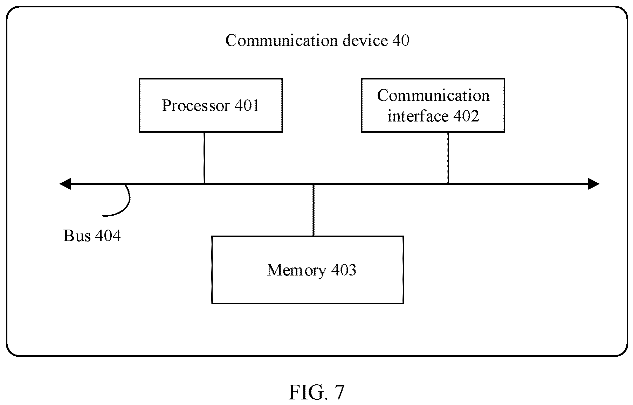

FIG. 7 shows a communication device according to an embodiment of this application. As shown in FIG. 7, the communication device 40 includes a processor 401, a communication interface 402, a memory 403, and a bus 404. The processor 401, the memory 403, and the communication interface 402 communicate with each other through the bus 404.

It should be understood that quantities of processors and memories in the communication device 40 are not limited in this application.

In an implementation, the communication device 40 may be the foregoing network side device. The network side device may be, for example, a server (for example, a server or a cloud platform for vehicle operation determining) deployed on a network side, or a component or a chip in the server. The network side device may be deployed in a cloud environment, or may be deployed in an edge environment.

In an implementation, the communication device 40 may be a vehicle or a processing apparatus in the vehicle. The processing apparatus may be, for example, a software and hardware integrated platform supporting vehicle body control and chassis control, for example, a vehicle domain controller (vehicle domain controller, VDC), or may be a software and hardware integrated platform (that is, a vehicle-mounted computing platform) supporting intelligent driving, for example, a mobile data center (mobile data center, MDC), an advanced driving assistance system domain controller (advanced driving assistance system domain controller, ADAS DC), or an automated driving domain controller (automated driving domain controller, AD DC).

The bus 404 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is indicated by using only one line in FIG. 7. However, it does not indicate that there is only one bus or only one type of bus. The bus 404 may include a path for transmitting information between components (for example, the memory 403, the processor 401, and the communication interface 402) of the communication device 40.

For the processor 401, refer to related descriptions of the processor in the foregoing embodiment. Details are not described herein again.

The memory 403 is configured to provide storage space, and the storage space may store data such as an operating system and a computer program. The memory 403 may be one or a combination of a random access memory (random access memory, RAM), an erasable programmable read-only memory (erasable programmable read-only memory, EPROM), a read-only memory (read-only memory, ROM), a compact disc read-only memory (compact disc read-only memory, CD-ROM), or the like. The memory 403 may exist independently, or may be integrated into the processor 401.

The communication interface 402 may be configured to provide an information input or output for the processor 401. Alternatively, the communication interface 402 may be configured to receive data sent from the outside and/or send data to the outside, and may be a wired link interface including an Ethernet cable, or may be a wireless link (for example, Wi-Fi, Bluetooth, or universal wireless transmission) interface. Alternatively, the communication interface 402 may further include a transmitter (for example, a radio frequency transmitter or an antenna), a receiver, or the like coupled to the interface.

The processor 401 in the communication device 40 is configured to read the computer program stored in the memory 403, to perform the foregoing method, for example, the method described in FIG. 2, FIG. 4, or FIG. 5.

In a possible design, the communication device 40 may be one or more modules in an entity for executing the method shown in FIG. 2. The processor 401 may be configured to read one or more computer programs stored in the memory, to perform the following operations:

obtain, by using an obtaining unit 301, a preset condition to be met by the vehicle for enabling a vehicle function on a target road section, where the preset condition includes N preset elements and requirement descriptions of the N elements, and N is a positive integer; and obtain operation information of the vehicle that is traveling on the target road section based on the automated driving system, where the operation information includes M elements and collected content of a current status of the M elements, the M elements are some or all of the N elements, and M is a positive integer; and

compare the preset condition with the operation information, and when collected content of a first element in the M elements does not match a requirement description of the first element, determine that the vehicle exits the automated driving system.

In the foregoing embodiments in this specification, the descriptions of embodiments have respective focuses. For a part that is not described in detail in an embodiment, refer to the related descriptions in other embodiments. In addition, in various embodiments of this application, unless otherwise stated or there is a logic conflict, terms and/or descriptions in different embodiments are consistent and may be mutually referenced, and technical features in various embodiments may be combined based on an internal logical relationship thereof, to form a new embodiment.

It should be noted that a person of ordinary skill in the art may learn that all or some of the steps of the methods in the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (electrically-erasable programmable read-only memory, EEPROM), a compact disc read-only memory (compact disc read-only memory, CD-ROM), or another optical disk memory, a magnetic disk memory, a magnetic tape memory, or any other computer-readable medium that can be configured to carry or store data.

The technical solutions of this application essentially, or the contributing part, or all or some of the technical solutions may be implemented in a form of a software product. The computer program product is stored in a storage medium and includes several instructions for enabling a device (which may be a personal computer, a server, a network device, a robot, a single-chip microcomputer, a chip, a robot, or the like) to perform all or some of the steps of the methods described in embodiments of this application.

**Claims**

1. A vehicle operation determining method, wherein the method comprises:

    obtaining a preset condition to be met by a vehicle for enabling a vehicle function on a target road section, wherein the preset condition comprises N preset elements and requirement descriptions of the N elements, and N is a positive integer;
    obtaining operation information of the vehicle that is traveling on the target road section based on an automated driving system, wherein the operation information comprises M elements and collected content of a current status of the M elements, the M elements are some or all of the N elements, and M is a positive integer;
    comparing the preset condition with the operation information; and
    when collected content of a first element in the M elements does not match a requirement description of the first element, determining that the vehicle exits the automated driving system.

2. The method according to claim 1, wherein the vehicle function is an automated driving function or an assisted driving function.

3. The method according to claim 1 or 2, wherein that the collected content of the first element does not match the requirement description of the first element is any one of the following cases:

both the requirement description of the first element and the collected content of the first element are values, and the requirement description of the first element is not equal to the collected content of the first element;

both the requirement description of the first element and the collected content of the first element are character strings, and the requirement description of the first element is different from the collected content of the first element;

the requirement description of the first element is a first value range, the collected content of the first element is a first value or a second value range, and the first value is not within the first value range or the second value range is not a subset of the first value range; or

the requirement description of the first element is a first character string set, the collected content of the first element is a first character string or a second character string set, and the first character string does not belong to the first character string set or the second character string set is not a subset of the first character string set.

4.  The method according to any one of claims 1 to 3, wherein comparing the preset condition with the operation information comprises:

comparing the collected content of the M elements with the preset condition in a preset order based on priorities of the M elements.

5.  The method according to any one of claims 1 to 4, wherein comparing the preset condition with the operation information comprises:

comparing whether collected content of each of the M elements matches a requirement description of the corresponding element, to obtain comparison results respectively corresponding to the M elements, wherein a second element is any one of the M elements, and when collected content of the second element matches a requirement description of the second element, a comparison result corresponding to the second element is 1; or when collected content of the second element does not match a requirement description of the second element, a comparison result corresponding to the second element is 0.

6.  The method according to any one of claims 1 to 5, wherein the method is applied to the vehicle, and the method further comprises:

requesting a user of the vehicle to take over; and

exiting the automated driving system when receiving a confirmation reply indicating that the user agrees to take over.

7.  The method according to claim 6, wherein the method further comprises:

controlling the vehicle to decelerate or stop before receiving the confirmation reply indicating that the user agrees to take over.

8.  The method according to any one of claims 1 to 5, wherein the method is applied to a network side device, and the method further comprises:

sending indication information to the vehicle, wherein the indication information indicates the vehicle to exit the automated driving system.

9.  A vehicle operation determining apparatus, wherein the apparatus comprises:

an obtaining unit, configured to: obtain a preset condition to be met by a vehicle for enabling a vehicle function on a target road section, wherein the preset condition comprises N preset elements and requirement descriptions of the N elements, and N is a positive integer; and obtain operation information of the vehicle that is traveling on the target road section based on the automated driving system, wherein the operation information comprises M elements and collected content of a current status of the M elements, the M elements are some or all of the N elements, and M is a positive integer; and

a determining unit, configured to: compare the preset condition with the operation information; and when collected content of a first element in the M elements does not match a requirement description of the first element, determine that the vehicle exits the automated driving system.

10.  The apparatus according to claim 9, wherein the vehicle function is an automated driving function or an assisted driving function.

11.  The apparatus according to claim 9 or 10, wherein that the collected content of the first element does not match the requirement description of the first element is any one of the following cases:

both the requirement description of the first element and the collected content of the first element are values, and the requirement description of the first element is not equal to the collected content of the first element;
both the requirement description of the first element and the collected content of the first element are character strings, and the requirement description of the first element is different from the collected content of the first element;
the requirement description of the first element is a first value range, the collected content of the first element is a first value or a second value range, and the first value is not within the first value range or the second value range is not a subset of the first value range; or
the requirement description of the first element is a first character string set, the collected content of the first element is a first character string or a second character string set, and the first character string does not belong to the first character string set or the second character string set is not a subset of the first character string set.

12. The apparatus according to any one of claims 9 to 11, wherein the determining unit is specifically configured to: compare the collected content of the M elements with the preset condition in a preset order based on priorities of the M elements.

13. The apparatus according to any one of claims 9 to 12, wherein the determining unit is specifically configured to: compare whether collected content of each of the M elements matches a requirement description of the corresponding element, to obtain comparison results respectively corresponding to the M elements, wherein a second element is any one of the M elements, and when collected content of the second element matches a requirement description of the second element, a comparison result corresponding to the second element is 1; or when collected content of the second element does not match a requirement description of the second element, a comparison result corresponding to the second element is 0.

14. The apparatus according to any one of claims 9 to 13, wherein the apparatus is the vehicle or is comprised in the vehicle, the apparatus further comprises a control unit, and the control unit is configured to:

request a user of the vehicle to take over; and
exit the automated driving system when receiving a confirmation reply indicating that the user agrees to take over.

15. The apparatus according to claim 14, wherein the control unit is further configured to: control the vehicle to decelerate or stop before receiving the confirmation reply indicating that the user agrees to take over.

16. The apparatus according to any one of claims 9 to 13, wherein the apparatus is a network side device or is comprised in the network side device, the apparatus further comprises a sending unit, and the sending unit is configured to: send indication information to the vehicle, wherein the indication information indicates the vehicle to exit the automated driving system.

17. A vehicle operation determining apparatus, wherein the apparatus comprises at least one processor and a communication interface, the communication interface is configured to receive and/or send data, and/or the communication interface is configured to provide input and/or output for the processor; and the at least one processor is configured to implement the method according to any one of claims 1 to 8.

18. A vehicle, wherein the vehicle comprises the apparatus according to any one of claims 9 to 16 and an automated driving system.

19. A computer-readable storage medium, wherein the computer-readable storage medium stores instructions; and when the instructions are run on at least one processor, the method according to any one of claims 1 to 8 is implemented.

FIG. 1

S201: Obtain a preset condition to be met by a vehicle for enabling a vehicle function on a target road section and operation information of the vehicle that is traveling on the target road section based on an automated driving system

S202: Compare the preset condition with the operation information, and when collected content of a first element in M elements in the operation information does not match a requirement description of the first element in the preset condition, determine that the vehicle exits the automated driving system

FIG. 2

Location 1

Moment Location
t1　　　2

FIG. 3

S401: Obtain a preset condition to be met by a vehicle for enabling a vehicle function on a target road section and operation information of the vehicle that is traveling on the target road section based on an automated driving system

S402: Compare the preset condition with the operation information, and when collected content of a first element in M elements in the operation information does not match a requirement description of the first element in the preset condition, determine that the vehicle exits the automated driving system

S403: Request a user of the vehicle to take over

S404: Exit the automated driving system when receiving a confirmation reply indicating that the user agrees to take over

FIG. 4

S501: The network side device obtains a preset condition to be met by the vehicle for enabling a vehicle function on a target road section and operation information of the vehicle that is traveling on the target road section based on an automated driving system

S502: The network side device compares the preset condition with the operation information, and when collected content of a first element in M elements in the operation information does not match a requirement description of the first element in the preset condition, determine that the vehicle exits the automated driving system

S503: Indication information, indicating the vehicle to exit the automated driving system

Network side device

Vehicle

FIG. 5

Communication apparatus 30

| Obtaining unit 301 | Determining unit 302 | Control unit 303 | Sending unit 304 |

FIG. 6

Communication device 40

Processor 401

Communication interface 402

Bus 404

Memory 403

FIG. 7

## INTERNATIONAL SEARCH REPORT

| International application No. |
|---|
| **PCT/CN2024/073781** |

| A. | CLASSIFICATION OF SUBJECT MATTER |
|---|---|

B60W60/00(2020.01)i

According to International Patent Classification (IPC) or to both national classification and IPC

| B. | FIELDS SEARCHED |
|---|---|

Minimum documentation searched (classification system followed by classification symbols)

IPC:B60W,G05D

Documentation searched other than minimum documentation to the extent that such documents are included in the fields searched

Electronic data base consulted during the international search (name of data base and, where practicable, search terms used)

CNTXT, ENTXTC, ENTXT, VEN, DWPI, WPABS, CJFD: 车辆, 运行, 判定, 方法, 预设, 预设条件, 元素, 运行信息, 采集, 匹配, 自动驾驶, vehicle, operations, decisions, methods, preset, conditions, elements, operational w information, acquisition, matching, autonomous w driving

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112859830 A (HUAWEI TECHNOLOGIES CO., LTD.) 28 May 2021 (2021-05-28) description, paragraphs [0081]-[0260], and figures 1-20 | 1-19 |
| A | CN 112455466 A (ANHUI JIANGHUAI AUTOMOBILE GROUP CO., LTD.) 09 March 2021 (2021-03-09) description, paragraphs [0049]-[0138], and figures 1-5 | 1-19 |
| A | CN 115285083 A (SUZHOU ASIA-PACIFIC JINGRUI TRANSMISSION TECHNOLOGY CO., LTD.) 04 November 2022 (2022-11-04) entire document | 1-19 |
| A | CN 105808097 A (LENOVO (BEIJING) CO., LTD.) 27 July 2016 (2016-07-27) entire document | 1-19 |
| A | JP 2014099078 A (TOYOTA MOTOR CORP.) 29 May 2014 (2014-05-29) entire document | 1-19 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 April 2024** | **02 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/073781**

| Patent document cited in search report | | | Publication date (day/month/year) | Patent family member(s) | Publication date (day/month/year) |
|---|---|---|---|---|---|
| CN | 112859830 | A | 28 May 2021 | None | |
| CN | 112455466 | A | 09 March 2021 | None | |
| CN | 115285083 | A | 04 November 2022 | None | |
| CN | 105808097 | A | 27 July 2016 | None | |
| JP | 2014099078 | A | 29 May 2014 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310226142